# EUROPÄISCHE PATENTSCHRIFT

(11) **EP 3 155 288 B1**
(45) Veröffentlichungstag und Bekanntmachung des Hinweises auf die Patenterteilung: **15.08.2018**
(21) Anmeldenummer: 15720701.0
(22) Anmeldetag: 04.05.2015
(51) Int. Cl.: F16F 9/06

(54) **TRENNKOLBEN SOWIE EINROHRDÄMPFER**
DIVIDING PISTON AND SINGLE-TUBE DAMPER
PISTON DE SÉPARATION ET AMORTISSEUR MONOTUBE

(30) Priorität: 11.06.2014 DE 102014211129
(43) Veröffentlichungstag der Anmeldung: 19.04.2017
(73) Patentinhaber: Bayerische Motoren Werke Aktiengesellschaft, 80809 München (DE)
(72) Erfinder: EIFFLÄNDER, Thomas, 81825 München (DE)
(86) Internationale Anmeldenummer: PCT/EP2015/059653
(87) Internationale Veröffentlichungsnummer: WO 2015/188980

(56) Entgegenhaltungen:
- EP-A1- 0 261 293
- DE-A1- 10 250 070
- FR-A5- 2 179 288
- US-A- 3 019 009

## Beschreibung

Die Erfindung betrifft einen Einrohrdämpfer mit einem Trennkolben nach dem Oberbegriff des Anspruchs 1, der insbesondere zum Dämpfen der Schwingungen von Fahrwerksteilen eines Kraftfahrzeugs relativ zur Fahrzeugkarosserie verwendet werden kann. Zum Stand der Technik wird neben der FR 2.179.288 A und der EP 0 261 293 A1 auf JP 2006-266 290 A verwiesen.

Einrohrdämpfer sind aus dem Stand der Technik bekannt und weisen ein Gehäuse auf, in dem eine Arbeitskammer und eine Gegendruckkammer ausgebildet sind. Die Arbeitskammer und die Gegendruckkammer sind durch einen Trennkolben voneinander getrennt, der bewegbar innerhalb des Gehäuses angeordnet ist und die beiden Kammern voneinander abdichtet. Der Trennkolben weist hierzu einen Dichtring auf, der an einer Gehäuseinnenwand des Einrohrdämpfers anliegt.

Die Arbeitskammer weist ein Druckfluid auf, beispielsweise Öl, weswegen die Arbeitskammer auch als Ölraum bezeichnet wird. In der Arbeitskammer ist ein Arbeitskolben vorgesehen, der in dieser bewegbar angeordnet ist und das Druckfluid in der Arbeitskammer verdrängt. Der Arbeitskolben weist zudem Ventile auf, die eine bestimmte Durchflussmenge des verdrängten Druckfluids zulassen, um die Bewegung des Arbeitskolbens zu dämpfen. Das durch die Ventile strömende Druckfluid kann nur zu einem gewissen Teil widerstandsfrei durch die Ventile strömen. Der andere Teil des verdrängten Druckfluids dient der Dämpfung der Bewegung des Arbeitskolbens.

Die Gegendruckkammer weist ein kompressibles Medium auf, üblicherweise ein Gas, weshalb sie auch als Gasraum bezeichnet wird. Die Gegendruckkammer dient unter anderem dazu, die Volumenänderung zu kompensieren, die sich daraus ergibt, dass beim Verschieben des Arbeitskolbens innerhalb des Ölraums sich das Ölvolumen ändert, das von der mit dem Arbeitskolben verbundenen Kolbenstange verdrängt wird. Befindet sich die Kolbenstange größtenteils außerhalb des Ölraums, hat der Gasraum ein größeres Volumen, und befindet sich die Kolbenstange größtenteils innerhalb des Ölraums, ist der Gasraum komprimiert. Die Gegendruckkammer kompensiert zudem eine Volumenerhöhung des in der Arbeitskammer befindlichen Druckfluids aufgrund einer Erwärmung des Druckfluids. Ferner verhindert sie das Auftreten von Kavitationen beim schnellen Einfedern des Dämpfers und den damit verbundenen Komfortverlusten. Des Weiteren muss die Gegendruckkammer die maximal auftretenden Kräfte beim Dämpfen aufnehmen, um die Funktion des Dämpfers zu gewährleisten. Die maximal auftretenden Kräfte umfassen Kraftspitzen, die normalerweise nicht auftreten, sondern nur bei starken und kurzfristigen Beanspruchungen des Dämpfers. Hierzu muss die Gegendruckkammer einen entsprechend hohen initialen Druck aufweisen. Der hohe Druck in der Gegendruckkammer verursacht jedoch eine hohe Reibung des Dichtelements an der Gehäuseinnenwand, wenn der Trennkolben verstellt wird. Da der Druck auf das Gesamtsystem wirkt, muss das Dichtsystem Kolbenstange zu Gehäuse entsprechend ausgelegt werden, was auch an dieser Stelle in einer höheren Reibung resultiert.

Als nachteilig hat sich bei den soweit beschriebenen Einrohrdämpfern mit entsprechenden Trennkolben herausgestellt, dass ein negatives Andämpfen oder Ansprechverhalten in Form eines Ruckgleitens des Dämpfers vorliegt, das auch Stick-Slip-Effekt genannt wird. Dieses Ruckgleiten ist besonders bei kurzen und schnellen Dämpfvorgängen spürbar, da der Trennkolben wie die Kolbenstange an der Kolbenstangendichtung die hohen statischen Reibkräfte aufgrund des hohen initialen Drucks in der Gegendruckkammer überwinden muss. Dementsprechend sind bei den soweit beschriebenen Einrohrdämpfern Komforteinbußen hinzunehmen. Darüber hinaus verringert sich die Lebensdauer des Einrohrdämpfers, da die Trennkolbendichtung wie die Kolbenstangendichtung aufgrund der Reibkräfte schneller verschleißt.

Zur Abhilfe dieser Problematik ist es bereits grundsätzlich bekannt, an einem Trennkolben für einen Einrohrdämpfer ein elastisch verformbares Abstützelement zur Anlage an einer Gehäuseinnenwand des Einrohrdämpfers vorzusehen, wobei der Trennkolben einen Grundkörper mit wenigstens einem Kanal umfasst, der eine Strömungsverbindung von einer Oberfläche des Grundkörpers zum Abstützelement herstellt und wobei das Abstützelement bei Druckbeaufschlagung über den wenigstens einen Kanal nach außen beaufschlagt ist, insbesondere radial nach außen.

Ein solcher Trennkolben mit einem Abstützelement weist eine sog. dynamische Abstützfunktion auf, das heißt, dass das Abstützelement eine zur statischen Abstützkraft der Gegendruckkammer zusätzliche Abstützkraft bereitstellt. Die zusätzliche Abstützkraft ist abhängig von einem dynamischen Parameter wie der Druckbeaufschlagung des Trennkolbens. Demnach wird eine hohe zusätzliche Abstützkraft des Trennkolbens nur dann bereitgestellt, wenn diese auch wirklich benötigt wird. Das elastisch verformbare Abstützelement kann über den Kanal mit der Öl aufweisenden Arbeitskammer in Strömungsverbindung stehen, sodass das Abstützelement bei einer erhöhten Druckbeaufschlagung über das Öl nach außen beaufschlagt ist und sich eine zusätzliche Abstützkraft an der Gehäuseinnenwand einstellt. Bei einer geringeren Dämpfkraft liegt dagegen eine geringere Druckbeaufschlagung über den Kanal vor, sodass sich über das Abstützelement auch nur eine geringe zusätzliche Abstützkraft einstellt. Die dynamische Abstützfunktion ermöglicht es, einen geringeren initialen Druck in der Gegendruckkammer des Einrohrdämpfers vorzusehen, wodurch sich die statischen Belastungen des Trennkolbens verringern. Bei einem Andämpfen müssen vom Trennkolben demnach keine hohen Reibkräfte mehr überwunden werden, wodurch das Ruckgleiten und ein erhöhter Materialverschleiß vermieden wird.

Hiermit soll nun ein vereinfacht gestalteter Trennkolben für einen Einrohrdämpfer nach dem Oberbegriff des Anspruchs 1 aufgezeigt werden. Die Lösung der vorstehend genannten Aufgabe der vorliegenden Erfindung ergibt sich mit den Merkmalen des Anspruchs 1 und ist dadurch gekennzeichnet, dass das Abstützelement in Form einer dünnen Wand ein Teil des Grundkörpers ist. Demnach wird die elastische Verformbarkeit des Abstützelements dadurch sichergestellt, dass es sich um einen mit geringerer Wandstärke ausgeführten Abschnitt des Grundkörpers handelt, welcher aufgrund der geringen Materialstärke verformbar ist. Die Elastizität wird über das Material des Grundkörpers selbst bereitgestellt. Dabei kann das elastisch verformbare Abstützelement gleichzeitig als Dichtelement dienen, um im eingebauten Zustand die Arbeitskammer von der Gegendruckkammer abzudichten.

Im Übrigen kann der Grundkörper einen Hauptkanal und wenigstens einen Nebenkanal aufweisen, der mit dem Hauptkanal in Strömungsverbindung steht und im Wesentlichen senkrecht zum Hauptkanal verläuft. Hierdurch ist sichergestellt, dass die beim Dämpfen entstehende Druckkraft des Druckfluids, welche auf den Trennkolben wirkt, derart auf das Abstützelement übertragen wird, dass es nach außen beaufschlagt ist, insbesondere radial nach außen. Dabei können mehrere Nebenkanäle vorgesehen sein, die insbesondere kreuz- oder sternförmig zum Hauptkanal ausgerichtet sind. Dies ermöglicht eine gezielte Druckverteilung an bestimmte Positionen des Abstützelements, um eine definierte Abstützkraft einzustellen. Bei gleichen Abständen der Mündungen der Nebenkanäle kann eine homogene Druckverteilung auf das Abstützelement erreicht werden, wodurch sich eine homogene, über den Außenumfang verteilte Abstützkraft einstellt. Dies gewährleistet eine besonders günstige zusätzliche Abstützkraft sowie einen geringen Verschleiß. Die Nebenkanäle können ferner als Schlitze im Grundkörper ausgebildet sein, sodass sich eine entsprechend hohe Druckkraftübertragung auf das Abstützelement ergibt.

Ferner kann das Abstützelement zumindest einen gebogenen Abschnitt aufweisen, der von der Gehäuseinnenwand weggebogen ist, insbesondere derart, dass im Ausgangszustand ein Hohlraum zwischen dem Abstützelement und der Gehäuseinnenwand ausgebildet ist. Als Ausgangszustand ist dabei der Zustand anzusehen, bei dem der Trennkolben nicht druckbeaufschlagt ist. Aufgrund des weggebogenen Abschnitts weist der Trennkolben eine kleinere Reibfläche im Ausgangszustand auf. Aufgrund der Verformung des gebogenen Abschnitts vergrößert sich die Reibfläche im druckbelasteten Zustand, wodurch eine höhere Abstützkraft bereitgestellt wird. Die dynamische Abstützfunktion kann somit über die veränderliche Größe der Reibfläche realisiert werden.

Das Abstützelement kann deckelförmig oder zylindermantelförmig ausgebildet sein und den Grundkörper zumindest teilweise umschließen. Das Abstützelement kann quasi als eine Hülse für den Grundkörper ausgebildet sein, das über diesen gestülpt ist. Andererseits kann es sich bei dem Abstützelement auch um eine Art tiefgezogenen Deckel handeln, der den Grundkörper derart aufnimmt, dass lediglich die Oberfläche des Grundkörpers nicht umschlossen ist. Beiden Ausführungen ist gemein, dass die Mantelfläche oder die Seitenflächen des Abstützelements umschlossen ist bzw. sind.

Es kann der Trennkolben derart in der Arbeitskammer angeordnet sein, dass die Oberfläche des Grundkörpers, an der der wenigstens eine Kanal mündet, von der Gegendruckkammer weggewandt ist. Demnach ist der Trennkolben in der Arbeitskammer so angeordnet, dass dieser mit der Mündungsstelle des Kanals dem in der Arbeitskammer bewegbaren Arbeitskolben zugeordnet ist, wodurch das vom Arbeitskolben verdrängte Druckfluid in der Arbeitskammer in den Kanal gedrückt wird. Hierdurch ist sichergestellt, dass das verdrängte Druckfluid über den Kanal zum Abstützelement gelangen kann. Der Trennkolben ist sowohl in der Arbeitskammer als auch in der Gegendruckkammer angeordnet, da er über sein Dichtelement die Grenze dieser beiden Kammern definiert.

Weitere Vorteile und Eigenschaften der Erfindung ergeben sich aus der nachfolgenden Beschreibung und den Zeichnungen, auf die Bezug genommen wird. In den Zeichnungen zeigen:

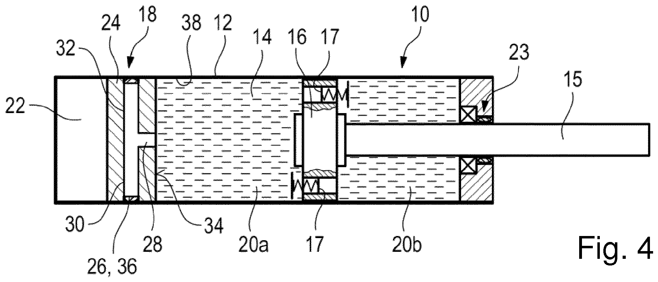

- Figur 4 eine Schnittdarstellung eines Einrohrdämpfers nach dem nächstkommenden Stand der Technik,
- Figur 1 eine perspektivische Teilschnittansicht eines erfindungsgemäßen Trennkolbens gemäß einer ersten Ausführungsform,
- Figur 2 eine perspektivische Ansicht eines erfindungsgemäßen Trennkolbens gemäß einer zweiten Ausführungsform,
- Figur 3 eine perspektivische Teilschnittansicht eines erfindungsgemäßen Trennkolbens gemäß einer dritten Ausführungsform.

In der im Wesentlichen den Stand der Technik wiedergebenden Figur 4 ist ein Einrohrdämpfer 10 gezeigt, der ein Gehäuse 12 aufweist, das einen Gehäuseinnenraum 14 definiert.

Im Gehäuseinnenraum 14 ist ein mit einer Kolbenstange 15 gekoppelter Arbeitskolben 16 vorgesehen, der Ventile 17 aufweist. Der Arbeitskolben 16 ist innerhalb des Gehäuses 12 bewegbar angeordnet, um eine Bewegung eines hier nicht dargestellten Bauteils zu dämpfen, wie nachfolgend beschrieben wird.

Ferner umfasst der Einrohrdämpfer 10 einen Trennkolben 18, der im Gehäuseinnenraum 14 angeordnet ist und den Gehäuseinnenraum 14 in eine Arbeitskammer 20 und eine Gegendruckkammer 22 unterteilt.

In der Arbeitskammer 20 ist ein Druckfluid, beispielsweise Öl, vorgesehen, welches vom Arbeitskolben 16 bei einer Dämpfung verdrängt wird und durch die Ventile 17 strömt. Die Arbeitskammer 20 wird vom Arbeitskolben 16 in einen ersten Bereich 20a und einen zweiten Bereich 20b unterteilt, zwischen denen das Druckfluid über die Ventile 17 strömt. Der erste Bereich 20a ist zwischen dem Arbeitskolben 16 und dem Trennkolben 18 vorgesehen, wohingegen der zweite Bereich 20b zwischen dem Arbeitskolben 16 und einem Ende des Einrohrdämpfers 10 vorgesehen ist. An dem Ende ist ferner eine Kolbenstangendichtung 23 vorgesehen, die ein Austreten des Druckfluids verhindert und gleichzeitig die Kolbenstange 15 führt.

In der Gegendruckkammer 22 ist ein kompressibles Medium, beispielsweise ein Gas, vorgesehen, welches zum Volumenausgleich des beim Einschieben der Kolbenstange in die Arbeitskammer verdrängten Druckfluids dient. Das Medium in der Gegendruckkammer 22 steht unter einem initialen Druck, um die Dämpfkräfte des Arbeitskolbens 16 beim Dämpfen abzustützen.

Der Trennkolben 18 umfasst einen Grundkörper 24 sowie ein Dichtelement 26, welches am Grundkörper 24 angeordnet ist und die Arbeitskammer 20 von der Gegendruckkammer 22 abdichtet. Das Dichtelement 26 ist in der gezeigten Ausführungsform als elastisch verformbarer Gummiring ausgebildet, der axial mittig in einer Nut im Grundkörper 24 angeordnet ist.

Ferner geht aus Figur 4 hervor, dass der Grundkörper 24 des Trennkolbens 18 einen Hauptkanal 28 aufweist, welcher in zwei Nebenkanäle 30, 32 übergeht, die im Wesentlichen senkrecht zur Ausrichtung des Hauptkanals 28 ausgebildet sind. Der Hauptkanal 28 mündet an einer Oberfläche 34 des Grundkörpers 24, die von der Gegendruckkammer 22 weggewandt ist und dem Arbeitskolben 16 zugewandt ist.

Der Trennkolben 18 umfasst zudem ein Abstützelement 36, das in der gezeigten Ausführungsform gleichzeitig das Dichtelement 26 ist.

Das Abstützelement 36 steht in Strömungsverbindung mit der Arbeitskammer 20 und dem darin vorhandenen Druckfluid. Die Strömungsverbindung ist über die Nebenkanäle 30, 32 und den Hauptkanal 28 bereitgestellt.

Die Funktion des Abstützelements 36 wird nachfolgend anhand der Funktionsweise des Einrohrdämpfers 10 erläutert:
Bei einer Kompression des Arbeitskolbens 16 wird das in der Arbeitskammer 20 befindliche Druckfluid vom ersten Bereich 20a über die Ventile 17 in den zweiten Bereich 20b verdrängt, da auf den Arbeitskolben 16 eine Dämpfkraft ausgeübt wird. Aufgrund der Ventile 17 ist die Durchflussmenge des Druckfluids begrenzt, sodass das Überströmen des Druckfluids von der Dämpfkraft abhängig ist und die Bewegung des Arbeitskolbens 16 entsprechend dämpft.

Bei einem leichten Andämpfen des Einrohrdämpfers 10 wird nur ein geringes Volumen des Druckfluids durch den Arbeitskolben 16 verdrängt, das durch die Ventile 17 strömen muss. Das Volumen ist jedoch derart groß, dass das Druckfluid eine geringe Druckkraft auf den Trennkolben 18 ausübt. Diese Druckkraft hat eine Verschiebung des Trennkolbens 18 innerhalb des Gehäuseinnenraums 14 zur Folge. Der Trennkolben 18 bewegt sich dabei aufgrund der Druckausübung über sein Dichtelement 26 entlang einer Gehäuseinnenwand 38 des Einrohrdämpfers 10, wodurch das Volumen in der Gegendruckkammer 22 entgegen des initialen Drucks in dieser verringert wird.

Ferner wird das nicht sofort über die Ventile 17 überströmende Druckfluid vom Arbeitskolben 16 über den Hauptkanal 28 und die Nebenkanäle 30, 32 zum Abstützelement 36 gedrückt. Das Abstützelement 36 wird dabei aufgrund seiner elastischen Verformbarkeit entsprechend der Druckkraft des Druckfluids nach außen beaufschlagt, insbesondere radial nach außen. Bei einer geringen Druckkraft verformt sich das Abstützelement 36 nur gering nach außen bzw. wird nur gering nach außen beaufschlagt. Hierdurch liegt das Abstützelement 36 mit einem leicht höheren Druck an einem Flächenabschnitt der Gehäuseinnenwand 38 an, wodurch sich eine leicht höhere zusätzliche Abstützkraft an der Gehäuseinnenwand 38 einstellt.

Bei einer stärkeren Dämpfkraft verdrängt der Arbeitskolben 16 ein größeres Volumen an Druckfluid, wodurch eine entsprechend höhere Druckkraft auf den Trennkolben 18 wirkt.

Die höhere Druckkraft wird über den Hauptkanal 28 und die Nebenkanäle 30, 32 auf das Abstützelement 36 übertragen, welches dadurch stärker nach außen beaufschlagt wird. Aufgrund der höheren Druckkraft wird über das elastisch verformbare Abstützelement 36 eine höhere zusätzliche Abstützkraft erzeugt, die gewährleistet, dass die in der Arbeitskammer 20 vorhandenen Druckspitzen vom Trennkolben 18 abgestützt werden können.

Demnach nimmt das Abstützelement 36, welches in der gezeigten Ausführungsform gleichzeitig das Dichtelement 26 ist, die Druckkraft teilweise auf und transformiert diese in Reibung an der Gehäuseinnenwand 38, um eine zur statischen Abstützkraft zusätzliche dynamische Abstützkraft bereitzustellen, die abhängig von der Dämpfkraft bzw. der Druckkraft ist.

Der Trennkolben 18 dient somit zur dynamischen Abstützung von Druckspitzen, sodass der initiale Druck in der Gegendruckkammer 22 geringer sein kann, da über ihn keine Druckspitzen mehr abgestützt werden müssen, sondern lediglich die normalen Dämpfkräfte. Dies hat eine geringere statische Reibung des Trennkolbens 18 mit der Gehäuseinnenwand 38 zur Folge, wodurch kein Ruckgleiten beim Andämpfen auftritt. Zusätzlich kann aufgrund des geringeren notwendigen Initialdrucks in der Gegendruckkammer 22 die Kolbenstangendichtung 23 des Einrohrdämpfers 10 mit geringerer Vorspannung ausgeführt werden, wodurch sich ebenfalls das Ruckgleiten minimieren lässt. Ferner weisen der Trennkolben 18, die Kolbenstangendichtung 23 und der Einrohrdämpfer 10 aufgrund des geringeren Materialverschleißes eine längere Lebensdauer auf.

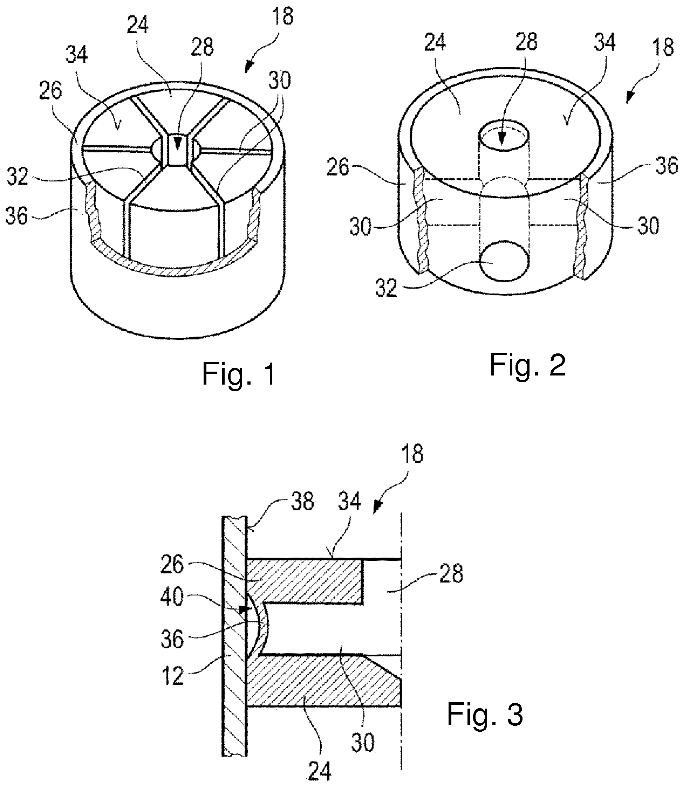

In Figur 1 ist eine erste mögliche Ausführungsform eines erfindungsgemäßen Trennkolbens 18 in einem Einrohrdämpfer 10 gezeigt, der einen zylindrisch ausgebildeten Grundkörper 24 aufweist, welcher einen mittig und zentral angeordneten Hauptkanal 28 aufweist, der sich bis zur Oberfläche 34 des Grundkörpers 24 erstreckt.

Vom Hauptkanal 28 verlaufen mehrere Nebenkanäle 30, 32 zum Abstützelement 36, die in der gezeigten Ausführungsform sternförmig zum Hauptkanal 28 ausgebildet sind. Die Nebenkanäle 30, 32 sind ferner als Schlitze im Grundkörper 24 ausgeführt, die sich ebenfalls bis zur Oberfläche 34 erstrecken. Der Grundkörper 24 ist dabei mit dem Abstützelement 36 verbunden, welches gleichzeitig ein bzw. das Dichtelement 26 bildet.

Das Abstützelement 36 ist in der gezeigten Ausführungsform deckelartig ausgebildet, sodass es den Grundkörper 24 zumindest teilweise umschließt, da lediglich die Oberfläche 34 des Grundkörpers 24 nicht vom Abstützelement 36 umschlossen ist. Die Mantelfläche und die der Oberfläche 34 entgegengesetzten Seite des Grundkörpers 24 sind vom Abstützelement 36 verdeckt. Das Abstützelement 36 fungiert dabei gleichzeitig als Dichtelement 26.

In Figur 2 ist eine weitere Ausführungsform des Trennkolbens 18 gezeigt, bei der das Abstützelement 36 wiederum gleichzeitig das Dichtelement 26 ist und zudem zylindermantelförmig ausgeführt ist.

Dies bedeutet, dass das Abstützelement 36 den Grundkörper 24 teilweise umgibt, wobei die Oberfläche 34 des Grundkörpers 24 sowie die dazu entgegengesetzte Seite des Grundkörpers 24 nicht vom Abstützelement 36 umschlossen sind. Das Abstützelement 36 umschließt demnach lediglich die Mantelfläche des in dieser Ausführungsform zylinderförmig ausgebildeten Grundkörpers 24.

Im Grundkörper 24 sind wiederum Nebenkanäle 30, 32 ausgebildet, die mit dem Hauptkanal 28 in Strömungsverbindung stehen und sich bis zum Abstützelement 36 erstrecken. Die Nebenkanäle 30, 32 verlaufen senkrecht zum Hauptkanal 28 und sind kreuzförmig zu diesem angeordnet. Der Grundkörper 24 ist auch in dieser Ausführungsform mit dem Abstützelement 26 verbunden.

In Figur 3 ist eine weitere Ausführungsform des Trennkolbens 18 dargestellt, wobei lediglich der Bereich des Abstützelements 36 gezeigt ist.

In dieser Ausführungsform ist das Abstützelement 36 durch ein Teil des Grundkörpers 24 selbst ausgebildet, der eine dünne Wand des Grundkörpers 24 ist.

Das Abstützelement 36 ist demnach in dieser Ausführungsform einstückig mit dem Grundkörper 24 ausgebildet.

Das Abstützelement 36 ist zudem gebogen ausgebildet, wobei es von der Gehäuseinnenwand 38 weggebogen ist, sodass sich zwischen der Gehäuseinnenwand 38 und dem Abstützelement 36 ein Hohlraum 40 ausbildet. Im Ausgangszustand liegt der Trennkolben 18 somit nicht vollflächig an der Gehäuseinnenwand 38 an, wodurch sich die Reibung entsprechend verringert.

Ferner weist der Trennkolben 18 einen Hauptkanal 28 auf, welcher sich von der Oberfläche 34 des Grundkörpers 24 senkrecht und mittig in den Grundkörper 24 hinein erstreckt und in zumindest einen Nebenkanal 30 mündet, der eine Strömungsverbindung zwischen der Arbeitskammer 20 und dem Abstützelement 36 herstellt.

Bei Druckbeaufschlagung wird ein Teil des Druckfluids aus der Arbeitskammer 20 über den Hauptkanal 28 und den wenigstens einen Nebenkanal 30 zum Abstützelement 36 gedrückt, welches aufgrund seiner elastisch verformbaren Ausbildung nach außen beaufschlagt wird, sodass das Abstützelement 36 bei entsprechend hoher Druckkraft an der Gehäuseinnenwand 38 anliegt. Hierdurch wird die zusätzliche Abstützkraft bereitgestellt, die abhängig von der Dämpfkraft bzw. Druckkraft ist.

Mit dem erfindungsgemäßen Trennkolben 18 in einem erfindungsgemäßen Einrohrdämpfer 10 ist es somit möglich, die für die Dämpfung benötigten Abstützkräfte teilweise dynamisch bereitzustellen. Die Abstützkräfte werden von einer statischen Grundabstützkraft sowie einer dynamischen zusätzlichen Abstützkraft bereitgestellt, wobei die Grundabstützkraft durch den Druck in der Gegendruckkammer 22 bereitgestellt wird. Die dynamische zusätzliche Abstützkraft wird in Abhängigkeit der Dämpf- bzw. Druckkraft vom Trennkolben 18 selbst bereitgestellt. Hierdurch können hohe statische Kräfte vermieden werden, wodurch sich die Lebensdauer entsprechend verlängert.

## Patentansprüche

1. Einrohrdämpfer (10) mit einem Gehäuse (12), in dem eine Arbeitskammer (20) und eine Gegendruckkammer (22) sowie ein in der Arbeitskammer (20) angeordneter Trennkolben (18) vorgesehen sind, der wenigstens ein verformbares Abstützelement (36) zur Anlage an einer Gehäuseinnenwand (38) des Einrohrdämpfers (10) und einen Grundkörper (24) mit wenigstens einem Kanal (28) aufweist, der eine Strömungsverbindung von einer Oberfläche (34) des Grundkörpers (24) zum Abstützelement (36) herstellt, wobei das Abstützelement (36) bei Druckbeaufschlagung über den wenigstens einen Kanal (28) nach außen beaufschlagt ist,
**dadurch gekennzeichnet, dass** das Abstützelement (36) in Form einer dünnen Wand Teil des Grundkörpers (24) ist

2. Einrohrdämpfer (10) nach Anspruch 1, **dadurch gekennzeichnet, dass** der Grundkörper (24) einen Hauptkanal (28) und wenigstens einen Nebenkanal (30, 32) aufweist, der mit dem Hauptkanal (28) in Strömungsverbindung steht und im Wesentlichen senkrecht zum Hauptkanal (28) verläuft.

3. Einrohrdämpfer (10) nach Anspruch 2, **dadurch gekennzeichnet, dass** mehrere Nebenkanäle (30, 32) vorgesehen sind, die insbesondere kreuz- oder sternförmig zum Hauptkanal (28) ausgerichtet sind.

4. Einrohrdämpfer (10) nach einem der vorhergehenden Ansprüche, wobei das Abstützelement (36) zumindest einen gebogenen Abschnitt aufweist, der von der Gehäuseinnenwand (38) weggebogen ist, insbesondere derart, dass im Ausgangszustand ein Hohlraum (40) zwischen dem Abstützelement (36) und der Gehäuseinnenwand (38) ausgebildet ist.

5. Einrohrdämpfer (10) nach einem der vorangegangenen Ansprüche, wobei der Trennkolben (18) derart in der Arbeitskammer (20) angeordnet ist, dass die Oberfläche (34) des Grundkörpers (24), an der der wenigstens eine Kanal (28) mündet, von der Gegendruckkammer (22) weggewandt ist.

## Claims

1. A single-tube damper (10) with a housing (12), in which a working chamber (20) and a counterpressure chamber (22) and a dividing piston (18) arranged in the working chamber (20) are provided, which dividing piston has at least one deformable supporting element (36) for lying against an inner housing wall (38) of the single-tube damper (10) and a main body (24) having at least one channel (28), which establishes a fluidic connection from a surface (34) of the main body (24) to the supporting element (36), wherein the supporting element (36) is acted upon outwardly when pressure is applied by way of the at least one channel (28),
**characterised in that** the supporting element (36) is part of the main body (24) in the form of a thin wall.

2. A single-tube damper (10) according to claim 1, **characterised in that** the main body (24) has a primary channel (28) and at least one secondary channel (30, 32), which is fluidically connected to the primary channel (28) and runs substantially at right angles to the primary channel (28).

3. A single-tube damper (10) according to claim 2, **characterised in that** a plurality of secondary channels (30, 32) are provided and more especially are oriented in a cross shape or star shape relative to the primary channel (28).

4. A single-tube damper (10) according to any one of the preceding claims, wherein the support element (36) has at least one bent portion, which is bent away from the inner housing wall (38), more especially in such a way that in the starting state a cavity (40) is formed between the support element (36) and the inner housing wall (38).

5. A single-tube damper (10) according to any one of the preceding claims, wherein the dividing piston (18) is arranged in the working chamber (20) in such a way that the surface (34) of the main body (24), at which the at least one channel (28) opens out, is turned away from the counterpressure chamber (22).

## Revendications

1. Amortisseur monotubulaire (10) équipé d'un boîtier (12) dans lequel sont situés une chambre de travail (20) et une chambre de pression antagoniste (22) ainsi qu'un piston de séparation (18) monté dans la chambre de travail (20), qui comporte au moins un élément d'appui déformable (36) destiné à s'appliquer sur la paroi interne du boîtier (38) de l'amortisseur mono-tubulaire (10) et un corps de base (24) équipé d'au moins un canal (28) réalisant la liaison fluidique entre la surface supérieure (34) du corps de base (24) et l'élément d'appui (36), lors d'une sollicitation en pression par l'intermédiaire du canal (28), l'élément d'appui (36) étant rappelé vers l'extérieur,
**caractérisé en ce que**
l'élément d'appui (36) est réalisé sous la forme d'une partie de paroi mince du corps de base (24).

2. Amortisseur mono-tubulaire (10) conforme à la revendication 1,
**caractérisé en ce que**
le corps de base (24) comporte un canal principal (28) et au moins un canal auxiliaire (30, 32) qui est en liaison fluidique avec le canal principal (28) et s'étend essentiellement perpendiculairement à ce canal principal (28).

3. Amortisseur mono-tubulaire (10) conforme à la revendication 2,
**caractérisé en ce qu'**
il est prévu plusieurs canaux auxiliaires (30, 32) qui sont orientés en particulier en forme de croix ou d'étoile vers le canal principal (28).

4. Amortisseur mono-tubulaire (10) conforme à l'une des revendications précédentes,
dans lequel l'élément d'appui (36) comporte au moins un segment courbe qui est courbé en s'éloignant de la paroi interne du boîtier (38), en particulier de sorte que soit formée à l'état de sortie une cavité (40) entre l'élément d'appui (36) et la paroi interne du boîtier (38).

5. Amortisseur mono-tubulaire (10) conforme à l'une des revendications précédentes,
dans lequel le piston de séparation (18) est monté dans la chambre de travail (20) de sorte que la surface supérieure (34) du corps de base (24) sur laquelle débouche le canal (28) soit située à l'opposé de la chambre de pression antagoniste (22).
